# EUROPÄISCHE PATENTSCHRIFT

(11) **EP 0 936 962 B1**
(45) Veröffentlichungstag und Bekanntmachung des Hinweises auf die Patenterteilung: **20.06.2001**
(21) Anmeldenummer: 97948801.2
(22) Anmeldetag: 24.10.1997
(51) Int. Cl.: B29B 17/02

(54) **VERFAHREN ZUM AUFSCHLUSS VON ABFÄLLEN, DIE WENIGSTENS TEILWEISE WIEDERVERWERTBARE ANTEILE ENTHALTEN**
PROCESS FOR DISAGGREGATING WASTE MATERIALS WHICH CONTAIN AT LEAST PARTIALLY REUSABLE ELEMENTS
PROCEDE DE DESAGREGATION DE DECHETS QUI CONTIENNENT DES ELEMENTS AU MOINS EN PARTIE REUTILISABLES

(30) Priorität: 25.10.1996 DE 19644437
(43) Veröffentlichungstag der Anmeldung: 25.08.1999
(73) Patentinhaber: Der Grüne Punkt-Duales System Deutschland Aktiengesellschaft, 51145 Köln (DE)
(72) Erfinder: HOBERG, Heinz, D-52072 Aachen (DE); CHRISTIANI, Joachim, D-52066 Aachen (DE); LANGEN, Michael, D-52074 Aachen (DE); BENDER, Martin, D-52064 Aachen (DE)
(74) Vertreter: Tönhardt, Marion, Dr.
(86) Internationale Anmeldenummer: EP9705896
(87) Internationale Veröffentlichungsnummer: WO9818607

(56) Entgegenhaltungen:
- EP-A- 0 570 757
- WO-A-90/14890
- GB-A- 1 228 276
- GB-A- 1 362 336
- GB-A- 1 512 257
- GB-A- 1 524 235
- GB-A- 2 198 662
- US-A- 4 849 116
- US-A- 5 257 740

## Beschreibung

Bei der Abfallentsorgung ist es im Laufe der Jahre gelungen, den bei Handel, Gewerbe und in den Haushalten anfallenden Müll unmittelbar vor Ort vorzusortieren. Diese Vorsortierung erfolgt im wesentlichen in fünf Fraktionen, nämlich Glas, Papier, nichtverwertbare Restabfälle, organische Abfälle sowie Abfälle mit verwertbaren Anteilen. Die Abfälle mit verwertbaren Anteilen werden mit einem überwiegenden Anteil durch Verpackungsabfälle gebildet und bestehen im wesentlichen aus den unterschiedlichsten Kunststoffen sowie Verbundstoffen, die im wesentlichen aus Pappen gebildet werden, die mit Kunststoffolien und/oder Metallfolien kaschiert sind, sowie Metalldosen. Das Abtrennen der wiederverwertbaren Anteile in diesen Abfällen erfolgt bisher in Form von Lesebändern, auf denen von Hand erkennbar wiederverwendbare Anteile, wie beispielsweise Metallverpackungen, Kunststoff-Hohlbehälter, greifbare Folienknäuel und dergleichen aussortiert werden. Der Grad der Rückgewinnung verwertbarer Stoffe im Handleseverfahren ist naturgemäß relativ gering, da praktisch nur solche Anteile aussortiert werden können, die mit einer behandschuhten Hand gefaßt werden können.

In GB-A-1 512 257 ist ein Verfahren zur Rückgewinnung von Kunststoffen aus unsortierten städtischen Abfällen beschrieben, das eine sehr starke Zerkleinerung der Feststoffanteile vorsieht, um so die Feststoffanteile, insbesondere die Kunststoffanteile, aus der durch die übrigen wasserlöslichen bzw. Wasser aufnehmenden Bestandteile der Abfallmasse entstehenden, eine Schwertrübe bildenden Suspension von der Suspensionsoberfläche abnehmen zu können. Dies bereitet nicht nur Probleme bei der anschließenden Trennung in unterschiedliche Kunststoffsorten, sondern führt auch dazu, daß durch diese 3-2001 trübescheidung nicht nur Kunststoffpartikel aufschwimmen.

Aus EP-A-0 570 757 ist ein Verfahren bekannt, bei dem im wesentlichen papierhaltige Abfälle in einem sogenannten Hydrapulper aufbereitet werden, um die Papierfasern zurück zu gewinnen. Die Abtrennung der Faserpulpe von Kunststoffteilen und Metallteilen, die im Aufgabegut enthalten sind, erfolgt noch als sogenanntes Schwergut im Hydrapulper, so daß eine Trennung dieses "Schwergutes" in Kunststoffe und Metalle in einem nachfolgenden Aufbereitungschritt erfolgt, der mit einer Zerkleinerung dieses Kunststoffe und Metalle enthaltenen Schwergutes beginnt. Das zerkleinerte Gut muß anschließend in einem aufwendigen Verfahren sortiert werden.

Der Erfindung liegt die Aufgabe zugrunde, ein Verfahren zu schaffen, das einen höheren Rückgewinnungsgrad beim Aufschluß derartiger, wiederverwertbarer Anteile enthaltende Abfälle ermöglicht und zu einem verbesserten Ausbringen der wiederverwertbarer Anteile führt.

Diese Aufgabe wird erfindungsgemäß gelöst mit einem Verfahren zum Aufschluß von Abfällen, die wenigstens teilweise wiederverwertbare Anteile, im wesentlichen Kunststoffe und Pappen sowie Metalle enthalten, bei dem die Abfälle zum Aufschluß in Wasser unter mechanischer Krafteinwirkung agitiert werden, wobei in den Abfällen enthaltene große Teile, im wesentlichen Kunststoffteile, grob zerkleinert und lösbare Anteile, im wesentlichen Pappen, aufgelöst werden und eine Suspension bilden, und bei dem aus der Suspension die Metallanteile als Schwergut, die übrigen groben Feststoffe, im wesentlichen Kunststoffe, zusammen mit der Suspension abgezogen, mechanisch von der Suspension abgetrennt und die suspendierten feinen Feststoffe unter Entwässerung als Feinstoff abgetrennt werden.

Der Begriff "Abfälle" umfaßt hierbei sowohl Abfälle in der bei der Anlieferung vorgegebenen Zusammensetzung, als auch in einer nach einer Vorsortierung anfallenden Zusammensetzung.

Das erfindungsgemäße Verfahren erlaubt einen sehr viel höheren Ausbringungsgrad an wiederverwertbaren Stoffen, als dies mit einem Handleseverfahren überhaupt möglich ist. Durch die Agitation in Wasser werden mit Kunststoffolien und/oder Metallfolien kaschierte Pappen voneinander in der Weise getrennt, daß bei einer entsprechenden Verweildauer der Pappanteil aufgelöst und als Faserstoff in Suspension geht. Durch die Krafteinwirkung im Wasserbad werden großformatige Verpakkungen aus dem vorstehend genannten Verbundmaterial, aber auch große Hohlkörper aus Kunststoff, wie Waschmittel- und Körperpflegemittelflaschen sowie Getränkedosen aus Aluminium aufgebrochen.

Durch die Krafteinwirkung im Wasserbad ist andererseits jedoch sichergestellt, daß für diese Teile nur eine grobe Zerkleinerung stattfindet, beispielsweise bis auf eine Größe von 300 mm. Zweckmäßig ist es hierbei, wenn die Zerkleinerung unter Wasser scherend-schneidend erfolgt. Die nur grobe Zerkleinerung bietet hierbei den Vorteil, daß die anschließende Trennung der groben Feststoffanteile aus der Suspension und etwaige nachfolgende Behandlungsschritte sich günstiger durchführen lassen. Die abgetrennten groben Feststoffe können nun je nach Zusammensetzung des Aufgabegutes entweder direkt verwertet werden oder aber, wenn durch das nachfolgende Verwertungsverfahren gefordert, in nachfolgenden Sortierstufen entsprechend aufgearbeitet werden. Bei den aus der Suspension abgetrennten feinen Feststoffen kommt es auch wieder darauf an, inwieweit in der verbleibenden Suspension Faserstoffe gelöst sind, die dann ebenfalls in einer nachfolgenden Stufe von den nichtverwertbaren Feinstoffen wie Sand, Staub, organischen Verunreinigungen oder dergleichen abgetrennt werden können. Infolge der vorzugsweise scherend-schneidenden Krafteinwirkung werden auch die im Aufgabegut enthaltenen Metallanteile in Form von Getränkedosen oder dergleichen ebenfalls bis zu einem gewissen Grade grob zerkleinert. Infolge ihrer Dichte können je nach dem eingesetzten Agitationsverfahren diese Metallanteile an den Boden der hierzu verwendeten Einrichtung absinken und dort zusammen mit anderen Schweranteilen als Schwergut abgezogen werden. Über eine Veränderung in der Energieeinleitung zur Erzeugung der Krafteinwirkung kann auf wechselnde Zusammensetzungen der Abfälle Rücksicht genommen werden.

Während für die Sortierung von Abfällen am Leseband die Abfallmengen möglichst ohne Verdichtung in schüttfähiger Form angeliefert werden müssen, bietet das erfindungsgemäße Verfahren den Vorteil, daß derartige Abfallmengen auch bis zu einem gewissen Grade kompaktiert sein dürfen, da bei der Aufgabe in das Wasser durch die Krafteinwirkung alle Klumpen und Ballungen zuverlässig aufgebrochen werden. Die Kompaktierung darf jedoch nicht so stark sein, daß beispielsweise Metalldosen vollständig zusammengepreßt werden und darin befindliche andere Müllkomponenten fest umschlossen sind.

Da die Zusammensetzung bis zu einem gewissen Grade von der Art der Abfallsammlung abhängt, kann es zweckmäßig sein, Vorsortierungsstufen vorzusehen, die dann zu einer Entlastung des Hauptverfahrens führen.

In vorteilhafter Ausgestaltung der Erfindung ist vorgesehen, daß die groben Feststoffe, die im wesentlichen aus den Kunststoffanteilen gebildet werden, beim Abtrennen aus der Suspension mit Reinwasser gespült werden. Dies kann beispielsweise durch einen Siebvorgang erfolgen, bei dem die zurückgehaltenen groben Feststoffe mit Reinwasser abgedüst werden. Hierbei kann es zweckmäßig sein, wenn die sich separierenden bzw. bereits separierten Feststoffe unter Krafteinwirkung bei gleichzeitiger Zufuhr von Reinwasser umgeschichtet werden. Das Umschichten kann hierbei durch rein mechanische Wirkung, beispielsweise durch die Aufgabe auf ein Trommelsieb erfolgen und/oder durch ein Abdüsen mit Wasser unter Druck, wobei die Kraftwirkung des Wassers zu einer Umschichtung der groben Feststoffe führt. Es ist aber auch möglich, die von der Suspension getrennten Feststoffe gesondert einem Wasserbad aufzugeben und unter Agitation aufzulockern und zu spülen.

Da, wie vorstehend bereits angegeben, die groben Feststoffe im wesentlichen durch Kunststoffanteile gebildet werden, hierbei aber praktisch alle gebräuchlichen Kunststoffarten in einer Mischung enthalten sind, so beispielsweise Kunststoffe auf Polyolefinbasis, Vinylchloridkunststoffe, Polycarbonatkunststoffe, Polystyrole und Polyethylenterephthalat, ist es in weiterer Ausgestaltung der Erfindung zweckmäßig, hier zumindest eine Sortierung nach unterschiedlichen Kunststoffen vorzunehmen, da eine derartig heterogene Kunststoffmischung praktisch nicht wiederverwertbar und nicht aufarbeitbar ist. Zweckmäßig ist es hierbei, wenn die groben Feststoffe in einer Sink-Schwimm-Scheidung nach ihrer Dichte in wenigstens zwei Fraktionen getrennt werden. Hierbei ist es besonders vorteilhaft, wenn die Sink-Schwimm-Scheidung so eingestellt wird, daß als Schwimmgut Polyolefin-Kunststoffe abgezogen werden können. Hierbei wird mit: Vorteil ausgenutzt, daß die Dichteunterschiede zwischen Polyolefin-Kunststoffen auf der einen Seite und den anderen vorstehend genannten Kunststoffarten so deutlich sind, daß hier eine praktisch 100%ige Scheidung zwischen den Polyolefin-Kunststoffen und der Masse der anderen Kunststoffarten möglich ist, so daß das Schwimmgut als ein guter wiederverwertbarer Wertstoff aus dem Abfall abgetrennt werden kann. Im Vergleich zur einem Leseband, bei dem aus dem Aufgabegut nur grobformatige, aufgrund der Erfahrung des Lesepersonals als Polyolefin-Kunststoffprodukte erkennbare Müllbestandteile aussortiert werden können, bietet das erfindungsgemäße Verfahren die Möglichkeit, nahezu den gesamten Anteil an Polyolefin-Kunststoffen aus dem Aufgabegut abzutrennen. Zur Erhöhung der Trennschärfe zwischen den beiden zu trennenden Fraktionen ist es zweckmäßig, wenn die Sink-Schwimm-Scheidung in einem Zentrifugalfeld erfolgt.

Je nach dem angewendeten Trennverfahren der in den groben Feststoffen enthaltenen Kunststoff-Fraktionen kann es zweckmäßig sein, wenn die groben Feststoffe vor ihrer Aufgabe in die Sink-Schwimm-Scheidung wenigstens einer weiteren Zerkleinerung unterworfen werden. In dem Grundaufschluß durch Agitation in der Suspension ist eine Zerkleinerung der großen Teile auf eine Stückgröße bis herunter auf etwa 300 mm möglich. Diese Stückgröße kann jedoch je nach Art der verwendeten Sink-Schwimm-Scheidung, insbesondere für eine Sink-Schwimm-Scheidung im Zentrifugalfeld noch zu groß sein, so daß hier eine weitere Zerkleinerung zweckmäßig ist, bei der die groben Feststoffe bis herunter auf ein Größe von etwa 30 mm oder auch in einer weiteren Zerkleinerungsstufe auf eine Größe von 5 mm erfolgt.Die Zerkleinerung erfolgt hierbei zweckmäßigerweise in Form einer Schneidzerkleinerung.

In Ausgestaltung der Erfindung ist vorgesehen, daß das im Hauptaufschluß anfallende Schwergut und/oder das in der Sink-Schwimm-Scheidung anfallende Sinkgut, das jeweils nicht-magnetische Metallanteile, im wesentlichen Aluminium enthält, einem Wirbenstromfeld ausgesetzt wird, so daß unter der Einwirkung des sich aufbauenden elektromagnetischen Feldes die nicht-magnetischen Metallanteile aus dem übrigen Sinkgut ausgeworfen werden. Hierbei kann es zweckmäßig sein, wenn die abgetrennten Metallanteile anschließend noch einem Spülverfahren unterworfen werden.

Je nach der Zusammensetzung und/oder der Möglichkeit der Weiterverwertung des aus dem Wirbelstromfeld austretenden Restgutes kann dieses entweder entsorgt werden, beispielsweise im Rahmen einer Müllverbrennung beseitigt werden, oder aber bei hohen Kunststoffanteilen als Mischkunststoff in weitere Fraktionen aufgeschlossen werden. Dieser im Wirbelstromscheider anfallende Mischkunststoff ist im wesentlichen aus den Kunststoffarten Polycarbonat, Polystyrol und Polyethylenterephthalat sowie Polyvinylchlorid zusammengesetzt. Beseitigt man aus diesem Mischkunststoff das Polyvinylchlorid, das für eine chemische Aufbereitung dieser Restfraktion störend wirkt, dann ergibt sich die Möglichkeit einer weiteren Verwertung dieses Restkunststoffanteils im Rahmen chemischer Aufarbeitungsverfahren. Hierzu ist es in Ausgestaltung des erfindungsgemäßen Verfahrens zweckmäßig, daß das von den Metallanteilen befreite Sinkgut zur Konditionierung in eine Wirbelschicht aufgelockert wird und anschließend in einem elektrostatischen Freifallscheider der PVC-Anteil im wesentlichen abgetrennt wird.

Je nach den Möglichkeiten der Weiterverarbeitung kann nun das PVC-freie Sinkgut als Kunststoffrohprodukt zur Weiterverarbeitung im Rahmen einer chemischen Aufarbeitung oder im Rahmen von Umformverfahren verwertet werden. Je nach den jeweils gegebenen Verwertungsmöglichkeiten kann es zweckmäßig sein, wenn das PVC-freie Sinkgut im einem weiteren Dichtetrennverfahren, beispielsweise in einem Zyklon oder in einer Zentrifuge, in wenigstens zwei Fraktionen getrennt wird. In diesem Trennverfahren können beispielsweise die Polystyrole abgeschieden werden, während die übrigen Kunststoff dann als Reststoffe deponiert oder verbrannt werden können. Zur Abscheidung der Polystyrole kann das Dichtetrennverfahren der PVC-Abscheidung auch vorgeschaltet werden.

Der zentrale Verfahrensschritt der Erfindung besteht darin, daß das Aufgabegut in Wasser unter mechanischer Einwirkung agitiert wird und so ein Aufschluß erfolgt, der es ermöglicht, ein Schwergut, das im wesentlichen Metallanteile enthält, grobe Feststoffe, die im wesentlichen aus Kunststoffen bestehen und im Wasser suspendierte feine Feststoffe, die im wesentlichen Faserstoffe aufweisen, zu trennen, wobei die groben Feststoffe in gereinigter Form als Mischkunststoff vorliegen, je nach der Zielsetzung entweder in der Mischung weiterverwertet werden oder aber noch, wie die vorstehend angegebenen einzelnen Verfahrensschritt aufweisen, noch weiter aufgeschlossen werden können.

Der Hauptschritt des erfindungsgemäßen Verfahrens kann nun in unterschiedlicher Ausgestaltung durchgeführt werden. In einer erfindungsgemäßen Ausgestaltung ist vorgesehen, daß der Aufschluß des Aufgabegutes durch Agitation in einem Wasserbad satzweise erfolgt und die Agitationsdauer in Abhängigkeit vom Aufschlußgrad bemessen wird. In diesem Verfahren kann berücksichtigt werden, daß das Aufgabegut je nach der Anlieferung in seiner Zusammensetzung erheblich variieren kann. Es ist durchaus möglich, daß in zeitlichen Unterschieden Chargen angeliefert werden, die überwiegend reine Kunststoffverpackungen enthalten, während nur wenige Pappe-Folien-Verpackungen enthalten sind. Bei einer derartigen Charge ist lediglich eine geringe Agitationsdauer erforderlich, so daß schon nach kurzer Agitationszeit die Trennung der Feststoffe von der Suspension vorgenommen werden kann. Andererseits ist es möglich, daß Chargen angeliefert werden, die überwiegend aus Pappe-Folien-Verpackungen bestehen. Bei derartigen Chargen ist eine längere Agitationsdauer erforderlich, um zum einen eine zuverlässige Trennung der Folien von der Pappeschicht und einen Aufschluß der Pappe zum Faserbrei zu bewirken.

In einer anderen Ausgestaltung der Erfindung ist vorgesehen, daß der Aufschluß des Aufgabegutes satzweise durch Agitation in wenigstens zwei räumlich oder zeitlich aufeinanderfolgenden Wasserbädern erfolgt. Bei einer derartigen Verfahrensweise ist es bei der räumlichen Trennung der Wasserbäder möglich, das Aufgabegut kontinuierlich anzuliefern und durch eine entsprechende Zahl von Wasserbädern den Aufschluß stufenweise herbeizuführen. Hierbei wird angestrebt, im ersten Wasserbad zunächst nur eine erste Zerkleinerung und dann im folgenden Wasserbad ebenfalls unter Agitation der Faseraufschluß erfolgt. Das Ziel dieser Verfahrensführung ist die Abführung der Hauptmenge der Schmutzfracht mit dem ersten Waschwasser. Die Faserstoffe werden im zweiten Wasserbad suspendiert. Durch diese Verfahrensführung sind die Faserstoffe praktisch frei von organischen Schmutzstoffen.

In einer anderen Ausgestaltung der Erfindung ist vorgesehen, daß der Aufschluß des Aufgabegutes durch Agitation im Wasser im Durchlauf kontinuierlich erfolgt. Eine derartige Behandlungsweise ist insbesondere dann zweckmäßig, wenn zum einen große Abfallmengen zur Verfügung stehen, wobei ggf. vor einer Aufgabe in die Aufschlußstufe der von den Sammelstellen angefahrene Müll in einer vorgeschalteten Mischstufe bis zu einem gewissen Grade homogenisiert wird.

Wie vorstehend bereits ausgeführt, kann es zweckmäßig sein, die angelieferten Abfälle je nach Zusammensetzung in einer Vorstufe vorbereitend aufzuschließen. Hierbei hat es sich in einer Ausgestaltung der Erfindung als zweckmäßig erwiesen, wenn aus dem Aufgabegut vor und/oder nach dem Aufschluß durch das Wasser ferro-magnetische Anteile durch Magnetscheidung entfernt werden. Es handelt sich hierbei im wesentlichen um Weißblechverpackungen, die in ihrem Gewichtsanteil im angelieferten Abfall bis zu 30% betragen können. Durch das vorherige Abscheiden aus dem Aufgabegut ergibt sich eine nennenswerte Entlastung des nachfolgenden nassen Aufschlußverfahrens.

Je nach der Qualität und Zusammensetzung der Abfälle kann es in Ausgestaltung des erfindungsgemäßen Verfahrens zweckmäßig sein, das Aufgabegut vor der Aufgabe zum Aufschluß mit Wasser einer trockenen Klassierung zu unterwerfen. Hierdurch wird es möglich, schon in einer Vorstufe eine Reihe von Fraktionen aus dem später naß aufzuschließenden Gut zu entfernen, die beim Naßaufschluß stören würden. Hierzu gehören insbesondere das im wesentlichen aus Steinen, Glas, Sand, organischen Abfällen und dergleichen bestehende Feingut, sowie im Bereich des Kunststoffanteils der Folienanteil.

In Ausgestaltung des erfindungsgemäßen Verfahrens ist es hierbei zweckmäßig, daß die Klassierung wenigstens einstufig durch Siebung und/oder Windsichtung erfolgt und daß im wesentlichen nur die durch Wasser aufzuschließenden Teile der durch die Klassierung gewonnenen Fraktionen zum Aufschluß in das Wasser gegeben werden.

Neben einer Klassierung durch Sieben und/oder Windsichtung besteht darüber hinaus im Bereich des trockenen Vorverfahrens noch die Möglichkeit, gezielt spezielle Anteile an den Abfällen auszusondern, so beispielsweise Flüssigkeitskartons und/oder PET-Flaschen. Eine derartige gezielte Aussonderung ist mit einem sogenannten Autosort-System möglich, bei dem über eine Infrarotmessung in den aufgelockert durchlaufenden Abfällen die auszusondernden Anteile erkannt und dann automatisch, beispielsweise über Preßluft, ausgeschieden werden können. Eine derartige Autosort-Einrichtung kann mehrstufig ausgebildet sein, so daß beispielsweise zunächst Flüssigkeitskartons und dann die vorstehend genannten PET-Flaschen ausgesondert werden können. Der verbleibende Teil wird dann dem Naßaufschluß zugeführt.

Die Erfindung wird anhand von Fließschemen näher erläutert. Es zeigen:
- Fig. 1: das Grundverfahren,
- Fig. 2: das Grundverfahren mit einer Aufbereitungsvorstufe.

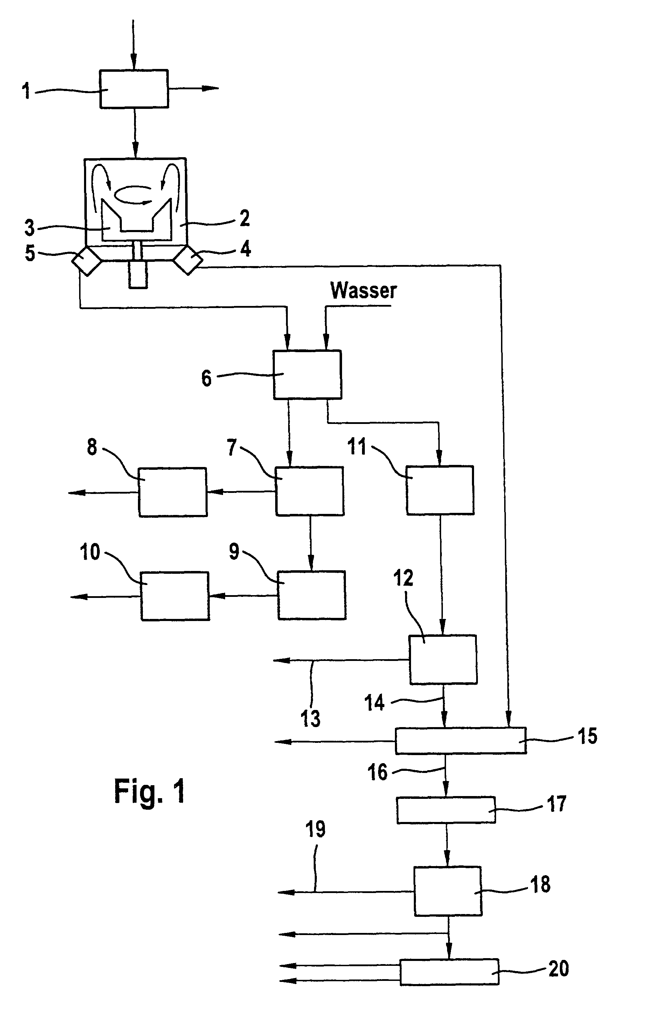

Das anhand des Fließschemas gem. Fig. 1 dargestellte und nachstehend näher beschriebene Ausführungsbeispiel für das Grundverfahren ist konzipiert mit der Zielrichtung, möglichst alle wiederverwertbaren Anteile im Aufgabegut voneinander zu separieren und einer Wiederverwertung zuzuführen. Je nach den Gegebenheiten kann auch an vorgebbaren Stellen des Fließbildes das Aufschlußverfahren "abgebrochen" werden.

Das aufzuschließende Aufgabegut besteht aus Abfällen, die wenigstens teilweise wiederverwertbare Anteile, im wesentlichen Metalle, Kunststoffe und Pappen, insbesondere mit Folien kaschierte Pappen enthält, wie es beispielsweise bei der Abfallentsorgung in den sogenannten "Gelben Tonnen" oder "Gelben Säcken" angeliefert wird oder auch in den Anlagen zur Sortierung dieses Materials in schüttfähiger Form erzeugt wird. Bei einer überwiegenden Anlieferung in Säcken erfolgt zunächst, hier nicht als Verfahrensschritt dargestellt, ein Aufreißen der Säcke. Dies ist jedoch, wie nachstehend noch näher angegeben wird, nicht unbedingt erforderlich, jedoch zweckmäßig.

Der in Form einer mehr oder weniger dichten Schüttung angelieferte Abfall wird zunächst über einen Magnetscheider 1 geführt, in dem ferro-magnetische Teile weitgehend aus dem Aufgabegut entfernt werden. Kern des Verfahrens ist eine sogenannte Naßstufe für den Aufschluß des Abfalls. Die vom Magnetscheider 1 oder auch aus einer vorgeschalteten trockenen Klassierung zugeführten Abfälle werden jeweils in vorgegebenen Aufgabegutmengen in ein Wasserbad gegeben, das durch einen Behälter 2 gebildet ist. Im Bodenbereich des Behälters 2 ist ein motorgetriebener rotierender Agitator 3 vorgesehen, durch den auf die Behälterfüllung eine entsprechende Kraftwirkung ausgeübt werden kann. Durch die Kraftwirkung wird zum einen der flüssige Teil nach Art einer Toroidströmung aufgerührt, wobei die Feststoffanteile jeder Art und zwar sowohl die Kunststoffe als auch die sonstigen Schweranteile, insbesondere NE-Metallanteile, mitgeschleppt werden und immer wieder in den Einwirkungsbereich des Agitators gelangen. Alle größeren Feststoffanteile, beispielsweise Kunststofflaschen, Aluminiumdosen oder auch Pappe-Folien-Verbund-Getränkepackungen werden hierbei mechanisch aufgebrochen, so daß sie je nach der Einwirkungsdauer in einer Größe von maximal etwa 300 mm vorliegen. Die in den Abfällen enthaltenen Papier- und Pappeanteile, insbesondere die Pappe-Folien-Verbundverpackungen, werden infolge der ständigen Umwälzungen im Wasserbad zum einen voneinander gelöst und zum anderen der Pappeanteil ebenso wie andere Papier- und Pappeanteile im Aufgabegut zu Fasern aufgelöst. Die Einwirkungsdauer des Agitators wird nach dem gewünschten Aufschlußgrad, der nach einiger Erfahrung auch optisch an der Farbe der sich bildenden Suspension beurteilt werden kann, bemessen. Die im Aufgabegut enthaltenen Schwerstoffe, insbesondere die nicht-ferromegnetischen Metallanteile, sinken spätestens nach Beendigung der Agitation weitgehend zum Boden des Behälters 2 ab und können hier über eine entsprechende Abzugsschleuse 4 gesondert abgezogen werden. Die Suspension wird aus dem Behälter 2 über ein Ablaßventil 5 abgelassen und einer Trenneinrichtung 6 zugeführt.

Da das Aufgabegut dem Behälter 2 satzweise zugeführt wird, ist eine vorherige optische Kontrolle der Grundzusammensetzung möglich. Sollte sich hierbei herausstellen, daß beispielsweise sehr stark mit Lebensmittelresten versehene Kunststoffanteile, beispielsweise Joghurtbecher oder dergl. in der Aufgabecharge enthalten sind, besteht hier die Möglichkeit, das Aufgabegut im Wasserbad mit nur geringer Krafteinwirkung über den Agitator 3 nur zu rühren und so zu waschen, ohne daß bereits eine Zerkleinerung stattfindet. Das Waschwasser wird dann über das Ablaßventil abgelassen und einer Wasseraufbereitung zugeführt. Anschließend wird der Behälter erneut mit Wasser gefüllt, so daß dann der vorbeschriebene Vorgang durchgeführt werden kann. Sollte erkennbar sein, daß im Aufgabegut sehr viele geschlossene Kunststoffbehälter enthalten sind, beispielsweise Flaschen und/oder Kanister, dann wird der Behälter 2 zunächst nur mit Wasser gefüllt und der Agitator 3 kurzzeitig mit erhöhter Drehzahl betrieben, so daß zum Aufbrechen der Kunststoffbehälter eine erhöhte Krafteinwirkung möglich ist. Anschließend wird der Agitator 3 mit normaler Drehzahl weiter betrieben.

In der Trenneinrichtung 6, beispielsweise wenigstens einem Trommelsieb, werden nun die grobzerkleinerten Feststoffe, die im wesentlichen aus Kunststoffteilen bestehen, von der übrigen Suspension getrennt. Die Suspension kann dann je nach ihren Inhaltsstoffen entwässert und in Form eines Schlammes deponiert oder verbrannt werden.

Bei einem hohen Pappeanteil ist es jedoch zweckmäßig, wenn die Suspension zunächst über eine Fasertrenneinrichtung 7, beispielsweise ein Taumelsieb oder ein Bogensieb geführt wird, in dem der Faseranteil von den übrigen Feinstanteilen abgetrennt wird. Der Faseranteil kann dann über eine Presse 8 entwässert werden und als Wertstoff der Pappe- oder Papierherstellung zugeführt werden. Die in der Fasertrenneinrichtung 7 anfallende Restsuspension wird nun entwässert und als Schlamm abgeführt. Die Entwässerung kann einstufig oder, wie hier dargestellt, zweistufig über einen Eindicker 9 und einen Dekanter 10 erfolgen.

Da es bei dem Verfahren in erster Linie darauf ankommt, die Kunststoffe aus den Abfällen möglichst rein zurückzugewinnen, wird in der Trenneinrichtung 6 nach der Trennung von der Suspension durch Reinwasser die noch anhaftenden Suspensionsmengen abgespült, um den angefallenen Mischkunststoff möglichst sauber der weiteren Aufbereitung zuführen zu können. Da infolge der Zerkleinerung die Kunststoffteile in überwiegendem Maße als flächige Teile vorliegen und daher schichtförmig aufeinanderliegen, wird in der Trenneinrichtung eine Umschichtung vorgenommen, was mechanisch, beispielsweise durch die Verwendung eines Trommelsiebes erfolgen kann und/oder durch die Zufuhr von Druckwasser, so daß durch die Einwirkung der Strahlkräfte des zugeführten Spülwassers ggf. in Verbindung mit der mechanischen Einwirkung eine weitgehende Abreinigung von der anhaftenden Suspension bewirkt werden kann.

Je nach den bestehenden Wiederverwertungsmöglichkeiten kann nun der so gereinigte und aus der Trenneinrichtung 6 abgezogene Mischkunststoff unmittelbar einer Verwertungsstufe zugeführt werden.

Da jedoch der anfallende Mischkunststoff in seiner sortenmäßigen Zusammensetzung sehr heterogen ist, kann es im Hinblick auf eine bessere und weitergehende Verwertung zweckmäßig sein, diesen Mischkunststoff zumindest in zwei weitere Fraktionen zu zerlegen, wobei von besonderem Interesse die Abtrennung der Polyolefin-Kunststoffe aus diesem Mischkunststoff ist.

Je nach dem verwendeten Scheideverfahren kann es nun zwechmäßig sein, die in der Trenneinrichtung 6 verhältnismäßig grob anfallenden Kunststoffteile in zumindest einer nachgeschalteten Zerkleinerungseinrichtung 11, die beispielsweise als langsam laufende Schneidzerkleinerung ausgebildet ist, eine Zerkleinerung auf Stückgrößen von etwa 30 mm zu bewirken.

Sofern für das nachfolgende Scheideverfahren eine weitere Zerkleinerung notwendig ist, kann hier in einer weiteren, dann schneller laufenden Schneidmühle eine Zerkleinerung auf eine Stückgröße von etwa 10 mm bis etwa 5 mm erfolgen.

Dieser Mischkunststoff wird nun einer Scheideeinrichtung 12, beispielsweise einer Sink-Schwimm-Scheidung zugeführt, die auf eine Dichtetrennung von lg/cm³ eingestellt ist. Wegen der geringen Dichteunterschiede der einzelnen Kunststoffsorten kann es hierbei zweckmäßig sein, wenn die Sink-Schwimm-Scheidung in einem Zentrifugalfeld erfolgt, beispielsweise in einer entsprechend ausgebildeten Vollmantelzentrifuge. In der Scheideeinrichtung 12 werden hierbei als Schwimmgut 13 die Polyolefin-Kunststoffe abgezogen. Das Sinkgut 14 enthält dann wiederum in Form eines Mischkunststoffes die restlichen Kunststofffraktionen, insbesondere Polycarbonat, Polystyrol, Polyethylenterephthalat und Polyvinylchlorid sowie im Behälter 2 vor einem Ansinken ausgeschwemmtes Aluminium.

Da das im Behälter 2 abgeschiedene Schwergut in der Regel einen hohen Aluminiumanteil aufweist und auch aufgrund einer möglichen höheren Zerkleinerung im Restgut 14 Aluminiumanteile enthalten sein können, ist es zweckmäßig, wenn sowohl das aus dem Behälter 2 abgezogene Schwergut als auch das aus der Scheideeinrichtung 12 abgezogene Restgut über einen Wirbelstromscheider 15 geführt wird, aus dem dann das Aluminium sowie etwaige andere enthaltene nicht-magnetische Metalle abgetrennt werden. Der verbleibende Restanteil kann nun durch Verbrennen oder Deponieren entsorgt werden.

Will man den aus dem Wirbelstromscheider 15 austretenden Restanteil noch weiterverwerten, dann ist es zweckmäßig, den in diesem Restanteil enthaltenen Anteil an Polyvinylchlorid-Kunststoffen abzutrennen, da der Polyvinylchlorid-Anteil bei der weiteren Verarbeitung der anfallenden Restkunststoffe störend wirken kann. Hierzu wird das aus dem Wirbelstromscheider 15 austretende Restgut 16 zunächst in einer Wirbelschichtkonditionierungsstufe 17 aufgelockert und anschließend in einem Freifallscheider 18 einem elektrostatischen Feld ausgesetzt, in dem bei entsprechender Einstellung der Trennschärfe die Polyvinylchlorid-Fraktion zusammen mit einem gewissen Anteil an Restkunststoffen über den Austrag 19 abgezogen werden kann. Der verbleibende Mischkunststoff, der dann im wesentlichen aus Polycarbonaten, Polystyrolen und Polyethylenterephthalaten besteht, kann dann als Kunststoffprodukt einer weiteren Verwertung zugeführt werden.

Sofern für diesen Restanteil an Mischkunststoff eine weitere Zerlegung wünschenswert ist, kann auch eine weitere Aufteilung beispielsweise mit Hilfe eines Luftherdes in eine Leichtgut-Fraktion, die im wesentlichen Polystyrol enthält und eine Schwergutfraktion mit dem verbleibenden Rest erfolgen.

Sofern aus dem Aufgabegut durch eine Magnetscheidung die ferro-magnetischen Anteile bereits entfernt worden sind und dementsprechend in den aus der Trenneinrichtung 6 abgezogenen Restkunststoffen praktisch nur noch Aluminiumteile enthalten sind (soweit diese nicht bereits über das Schwergut abgetrennt sind), besteht noch die Möglichkeit, diese Aluminiumteile vor der Scheidung 12 zu entfernen. Hierzu nutzt man die große Dichtedifferenz des Aluminiums zu den Kunststoffen aus. Die Abtrennung kann daher durch eine vorgeschaltete Sink-Schwimm-Scheidestufe, beispielsweise in Form eines Absetzvorgangs 16, gegebenenfalls mit Unterstützung durch aufströmendes Wasser erfolgen. Hierbei kann dann die Aufgabe des Sinkgutes aus der zweiten Sink-Schwimm-Scheidung 12 auf den Wirbelstromscheider 15 entfallen.

Die Entfernung der nicht-magnetisierbaren Metallteile aus dem Restgut 14 kann statt über einen Wirbelstromscheider auch über einen Coronawalzenscheider erfolgen.

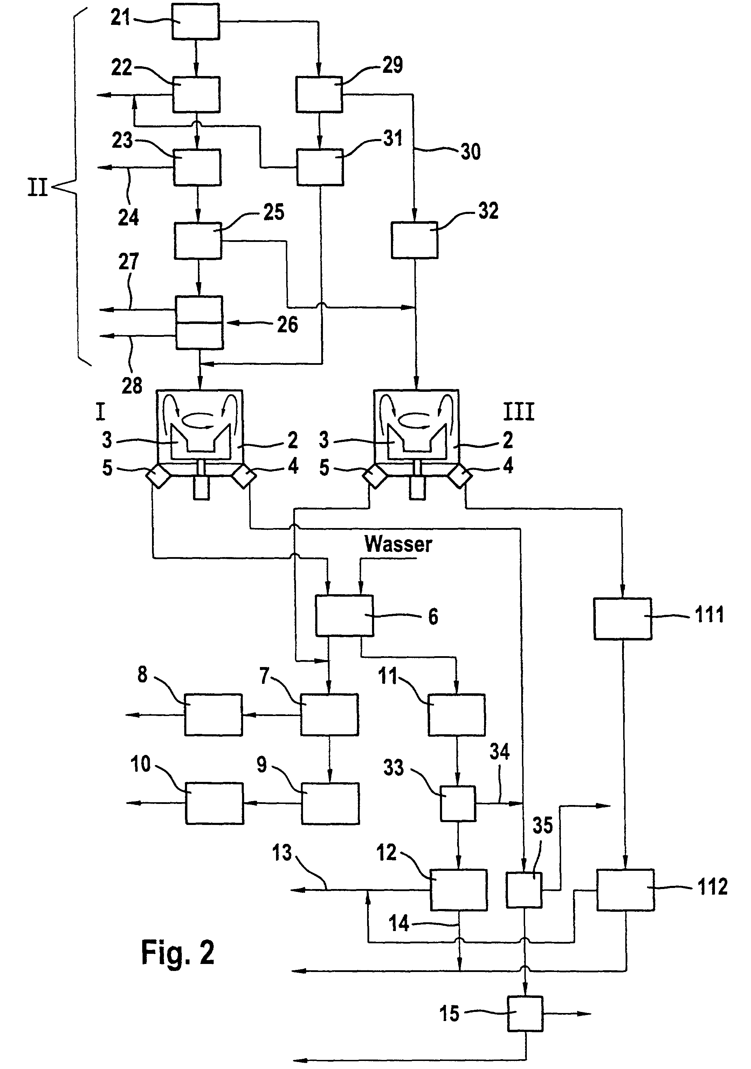

In Fig. 2 ist eine Abwandlung des vorstehend beschriebenen Grundverfahrens in einem Fließbild dargestellt. Der Unterschied zu dem anhand von Fig. 1 beschriebenen Verfahren besteht hierbei darin, daß der sogenannten Naßstufe I eine trockene Aufbereitungsvorstufe II vorgeschaltet ist. Der in Form einer mehr oder weniger dichten Schüttung angelieferte Abfall, wie er beispielsweise hinter einem hier nicht näher dargestellten Gebindeöffner anfällt, wird zur Klassierung einem ersten Sieb 21 aufgegeben, das eine Lochgröße von beispielsweise 180 bis 200 mm aufweist. Der als Mittel- und Feingut anfallende Siebdurchgang wird einem Magnetscheider 22 aufgegeben, um hier die ferro-magnetischen Metalle abzuscheiden. Anschließend wird das Mittel- und Feingut einem zweiten Sieb 23 aufgegeben, mit einem Siebschnitt bis 20 mm. Der hier anfallende Siebdurchgang 24, der im wesentlichen aus Steinen, Sand, Glas und organischen Anteilen besteht, wird als Deponiegut abgezogen. Der Sieboberlauf wird einer Windsichtung 25 zugeführt. Das hier gewonnene Schwergut kann, muß aber nicht, über eine sogenannten Autosort-Einrichtung 26 geführt werden, in der durch optische Verfahren über eine Infrarotmessung beispielsweise Flüssigkeitskartons als Abgang 27 und spezielle Kunststoffe, beispielsweise PET-Flaschen, als Abgang 28 aus dem Abfallstrom automatisch aussortiert werden können. Der verbleibende Rest wird dann der Naßstufe I zugeführt und dort entsprechend dem anhand von Fig. 1 beschriebenen Grundverfahren aufgeschlossen.

Das in der ersten Siebstufe 21 abgeteilte Grobgut wird einer Windsichtung 29 zugeführt, in der Leichtgut 30, im wesentlichen großflächige Kunststoffolien, abgetrennt werden.

Das in der Windsichtung 29 anfallende Schwergut wird ggf. über einen Magnetscheider 31 zur Abscheidung der groben ferro-magnetischen Anteil geführt und anschließend der Naßstufe I aufgegeben.

Da das in der Windsichtung 29 anfallende, im wesentlichen aus Folien bestehende Leichtgut 30 nur noch aus großflächigen Folien und/oder großflächigen, aus Kunststoff und Pappen bestehenden Verbundstoffen besteht, genügt es, wenn diese in einer Zerkleinerungsstufe 32 vorzerkleinert und anschließend einer Naßstufe III aufgegeben werden, die in Aufbau und Funktion der Naßstufe I entspricht.

Die in der Naßstufe III anfallende Suspension, die im wesentlichen aus einer Faserpulpe besteht, wird der zur Naßstufe I zugehörigen Fasertrenneinrichtung 7 zugeführt und entsprechend aufbereitet, wie dies anhand von Fig. 1 beschrieben ist.

Der in der Naßstufe III ebenfalls als Mischkunststoff anfallende Festanteil wird zunächst in einer weiteren Zerkleinerungsstufe 111 vorzerkleinert und dann in einer weiteren Scheideeinrichtung 112 in wenigstens zwei Fraktionen zerlegt, wie dies anhand von Fig. 1 für den entsprechenden Verfahrensschritt der Naßstufe I vorstehend beschrieben ist.

Wie in Fig. 2 dargestellt, kann der Zerkleinerungseinrichtung 11 der Naßstufe I eine sogenannten Schwergutfalle 33 nachgeschaltet werden, aus der das Schwergut 34 dem über den Abzug 4 des Behälters 2 abgezogenen Schwergut zugegeben werden, das anschließend über einen weiteren Magnetscheider 35 geführt wird. Der Überlauf des Magnetscheiders 35 wird, wie anhand von Fig. 1 beschrieben, einem Wirbelstromscheider 15 zugeführt, über den dann das Aluminium und etwa enthaltene andere nichtmagnetische Metalle abgetrennt werden können.

Die vorstehend beschriebene Zuordnung der Schwergutfalle 33 und des zusätzlichen Magnetscheiders 35 kann auch beim Grundverfahren entsprechend Fig. 1 vorgesehen werden.

Ebenso können die anhand von Fig. 1 im Wirbelscheider 15 nachgeschalteten und vorstehend beschriebenen Aufbereitungsmaßnahmen getroffen werden.

## Patentansprüche

1. Verfahren zum Aufschluß von Abfällen, die wenigstens teilweise wiederverwertbare Anteile, im wesentlichen Kunststoffe und Pappen sowie Metalle enthalten, bei dem die Abfälle zum Aufschluß in Wasser unter mechanischer Krafteinwirkung agitiert werden, wobei in den Abfällen enthaltene große Teile, im wesentlichen Kunststoffteile, grob zerkleinert und lösbare Anteile, im wesentlichen Pappen, aufgelöst werden und eine Suspension bilden, und bei dem aus der Suspension die Metallanteile als Schwergut abgetrennt, die übrigen groben Feststoffe, im wesentlichen Kunststoffe, zusammen mit der Suspension abgezogen, mechanisch von der Suspension abgetrennt und die suspendierten feinen Feststoffe unter Entwässerung als Feinstoff abgetrennt werden.

2. Verfahren nach Anspruch 1, dadurch gekennzeichnet, daß die groben Feststoffe nach dem Abtrennen aus der Suspension mit Reinwasser gespült werden.

3. Verfahren nach Anspruch 1 oder 2, dadurch gekennzeichnet, daß die groben Feststoffe in wenigstens einer Sink-Schwimm-Scheidestufe nach ihrer Dichte in wenigstens zwei Fraktionen getrennt werden.

4. Verfahren nach Anpspruch 3, dadurch gekennzeichnet, daß die Sink-Schwimm-Scheidung so eingestellt wird, daß als Schwimmgut Polyolefin-Kunststoffe abgezogen werden.

5. Verfahren nach einem der Ansprüche 1 bis 4, dadurch gekennzeichnet, daß die Sink-Schwimm-Scheidung in einem Zentrifugalfeld erfolgt.

6. Verfahren nach einem der Ansprüche 1 bis 5, dadurch gekennzeichnet, daß die groben Feststoffe vor der Aufgabe in die Sink-Schwimm-Scheidung wenigstens einer weiteren Zerkleinerung unterworfen werden.

7. Verfahren nach einem der Ansprüche 1 bis 6, dadurch gekennzeichnet, daß das Sinkgut einem Wirbelstromfeld ausgesetzt wird und hierbei nicht-magnetische Metallanteile, im wesentlichen Aluminium, abgetrennt werden.

8. Verfahren nach einem der Ansprüche 1 bis 7, dadurch gekennzeichnet, daß das metallfreie Sinkgut in einer Wirbelschicht aufgelockert und anschließend in einem elektrostatischen Freifallscheider der PVC-Anteil im wesentlichen abgetrennt wird.

9. Verfahren nach einem der Ansprüche 1 bis 8, dadurch gekennzeichnet, daß das Sinkgut in wenigstens einem Dichtrennverfahrensschritt in wenigstens zwei Fraktionen getrennt wird.

10. Verfahren nach einem der Ansprüche 1 bis 9, dadurch gekennzeichnet, daß das aus der Suspension abgetrennte Schwergut einem Wirbelstromfeld ausgesetzt wird und hierbei nicht-magnetische Metallanteile, im wesentlichen Aluminium, abgetrennt werden.

11. Verfahren nach einem der Ansprüche 1 bis 10, dadurch gekennzeichnet, daß aus der Suspension nach dem Abtrennen der groben Feststoffe der Faserstoffanteil abgetrennt und entwässert wird.

12. Verfahren nach einem der Ansprüche 1 bis 11, dadurch gekennzeichnet, daß der Aufschluß des Aufgabegutes durch Agitation in einem Wasserbad satzweise erfolgt und die Agitationsdauer in Abhängigkeit vom Aufschlußgrad bemessen wird.

13. Verfahren nach einem der Ansprüche 1 bis 12, dadurch gekennzeichnet, daß der Aufschluß des Aufgabegutes satzweise durch Agitation in wenigstens zwei aufeinanderfolgenden Wasserbädern erfolgt.

14. Verfahren nach einem der Ansprüche 1 bis 11, dadurch gekennzeichnet, daß der Aufschluß des Aufgabegutes durch Agitation in Wasser im Durchlauf kontinuierlich erfolgt.

15. Verfahren nach einem der Ansprüche 1 bis 14, dadurch gekennzeichnet, daß aus dem Aufgabegut vor und/oder nach dem Aufschluß durch das Wasser ferro-magnetische Anteile durch Magnetscheidung entfernt werden.

16. Verfahren nach einem der Ansprüche 1 bis 15, dadurch gekennzeichnet, daß das Aufgabegut vor der Aufgabe zum Aufschluß durch Wasser einer trockenen Aufbereitungsvorstufe unterworfen wird.

17. Verfahren nach einem der Ansprüche 1 bis 16, dadurch gekennzeichnet, daß die Klassierung wenigstens einstufig durch Siebung und/oder Windsichtung erfolgt und daß im wesentlichen nur die durch Wasser aufzuschließenden Teile der durch die Klassierung gewonnenen Fraktionen in das Wasser aufgegeben werden.

## Claims

1. Process for the treatment of waste matter which contains components which are at least partially reusable, essentially being plastic materials and board as well as metals, in which process the waste matter to be treated is agitated in water with the application of mechanical force, whereby large parts, essentially being parts of plastics material, are coarsely reduced in size and soluble components, essentially being card board and paper board, are dissolved, and in which process the metal components, as heavy matter, are separated, the remaining solids, essentially being plastics materials, are extracted together with the suspension, are separated mechanically from the suspension, and the suspended fine solids being separated by draining as fine material.

2. Process according to claim 1, characterized in that, after separation from the suspension, the coarse solid matter is rinsed with clean water.

3. Process according to claim 1 or 2, characterized in that the coarse solid matter is separated into at least two fractions according to their density in at least one gravimetric flotation separation step.

4. Process according to claim 3, characterized in that the gravimetric flotation separation process is adjusted such that polyolefin plastics materials are withdrawn as the floating matter.

5. Process according to one of claims 1 to 4, characterized in that the gravimetric flotation separation process is carried out in a centrifugal field.

6. Process according to one of claims 1 to 5, characterized in that the coarse solids are subjected to at least one further reduction in size prior to their admission to the gravimetric flotation separation process.

7. Process according to one of claims 1 to 6, characterized in that the deposited matter is exposed to an eddy current field, and, in doing so, non-magnetic metal components, essentially being aluminum, are separated off.

8. Process according to one of claims 1 to 7, characterized in that the metal-free deposited matter is loosened up in a fluidized bed and, subsequently, the PVC-components are substantially separated off in an electrostatic free-fall separator.

9. Process according to one of claims I to 8, characterized in that the deposited matter is divided into at least two fractions in at least one density-based separation step.

10. Process according to one of claims 1 to 9, characterized in that the heavy matter separated out of the suspension is exposed to an eddy current field and, in doing so, non-magnetic metal components, essentially being aluminum, are separated off.

11. Process according to one of claims 1 to 10, characterized in that after the separation of the coarse solids, the fibrous material component is separated out of the suspension and is drained.

12. Process according to one of claims 1 to 11, characterized in that the breakdown of the matter to be treated is carried out in batches by agitation in a water bath, the degree of break down being determined according to the duration of the agitation.

13. Process according to one of claims I to 12, characterized in that the breakdown of the matter to be treated is carried out in batches by agitation in at least two successive water baths.

14. Process according to one of claims 1 to 11, characterized in that the break down of the matter to be treated is carried out continuously in a through-flow by agitation in water.

15. Process according to one of claims 1 to 14, characterized in that prior to and/or after breaking down by the water ferromagnetic components are removed from the matter to be treated by magnetic separation.

16. Process according to one of claims 1 to 15, characterized in that the matter to be treated is subjected to a dry preliminary processing step prior to its admission for breaking down by water.

17. Process according to one of claims 1 to 16, characterized in that the separation is carried out in at least one stage by screening and/or air separation and in that essentially only those parts which are to be broken down by water of the fractions obtained from the separation are introduced into the water.

## Revendications

1. Procédé de désagrégation de déchets contenant des éléments au moins partiellement réutilisables, principalement des plastique, des cartons et des métaux, dans lequel les déchets sont, aux fins de désagrégation, brassés dans de l'eau avec application d'une force mécanique, d'où il résulte que les gros éléments contenus dans les déchets, essentiellement des objets en plastiques, sont grossièrement déchiquetés et que les fractions dissolubles, essentiellement des cartons, se dissolvent et forment une suspension, que les éléments métalliques sont séparés de la suspension en tant que fraction lourde, les autres gros solides, essentiellement des plastiques, étant évacués en même temps que la suspension et séparés mécaniquement de la suspension, et les petits solides en suspension étant isolés sous forme de fines par déshydratation.

2. Procédé selon la revendication 1, caractérisé en ce que les gros solides sont rincés à l'eau pure après leur séparation de la suspension.

3. Procédé selon l'une des revendications 1 ou 2, caractérisé en ce que les gros solides sont séparés en deux fractions au moins, en fonction de leur masse volumique, par au moins une étape de séparation par sédimentation-flottation.

4. Procédé selon la revendication 3, caractérisé en ce que l'étape de séparation par sédimentation-flottation est conçue de telle manière que les plastiques polyoléfiniques soient récupérés en tant que flottant (fraction légère).

5. Procédé selon l'une des revendications 1 à 4, caractérisé en ce que la séparation par sédimentation-flottation est effectuée dans un champ centrifuge.

6. Procédé selon l'une des revendications 1 à 5,
caractérisé en ce que les gros solides sont soumis à au moins un broyage supplémentaire avant l'étape de séparation par sédimentation-flottation.

7. Procédé selon l'une des revendications 1 à 6, caractérisé en ce que les plongeants (fraction lourde) sont exposés à un champ magnétique (courants de Foucault), ce qui a pour effet de séparer les fractions métalliques non magnétiques, principalement de l'aluminium.

8. Procédé selon l'une des revendications 1 à 7, caractérisé en ce que les plongeants exempts de métaux sont dispersés dans un lit fluidisé et que la fraction de PVC est principalement séparée dans un séparateur électrostatique par gravité.

9. Procédé selon l'une des revendications 1 à 8, caractérisé en ce que les plongeants sont séparés en au moins deux fractions dans une étape de séparation par densité.

10. Procédé selon l'une des revendications 1 à 9, caractérisé en ce que les plongeants isolés de la suspension sont exposés à un champ magnétique afin de séparer les fractions métalliques non magnétiques, essentiellement de l'aluminium.

11. Procédé selon l'une des revendications 1 à 10, caractérisé en ce que la fraction fibreuse est séparée de la suspension après élimination des gros solides et déshydratée ensuite.

12. Procédé selon l'une des revendications 1 à 11, caractérisé en ce que la désagrégation des matières est opérée en mode discontinu par brassage dans un bain d'eau et que la durée de brassage est déterminée en fonction du degré de désagrégation.

13. Procédé selon l'une des revendications 1 à 12, caractérisé en ce que la désagrégation des matières est opérée en mode discontinu par agitation dans au moins deux bains d'eau successifs.

14. Procédé selon l'une des revendications 1 à 11,
caractérisé en ce que la désagrégation des matières est effectuée par agitation dans de l'eau en passage continu.

15. Procédé selon l'une des revendications 1 à 14, caractérisé en ce que l'on élimine des matières, avant et/ou après désagrégation dans l'eau, les fractions ferromagnétiques par séparation magnétique.

16. Procédé selon l'une des revendications 1 à 15, caractérisé en ce que les matières sont, avant leur désagrégation dans l'eau, soumises à une étape de traitement préparatoire.

17. Procédé selon l'une des revendications 1 à 16, caractérisé en ce que la classification est effectuée en au moins une étape, par criblage et/ou triage à vent et que pratiquement seules les parties à dissoudre dans l'eau des fractions de classification sont envoyées dans l'eau.
